# EUROPEAN PATENT APPLICATION

(11) **EP 4 404 360 A1**
(43) Date of publication of application: **24.07.2024**
(21) Application number: 22869689.4
(22) Date of filing: 19.07.2022
(51) Int. Cl.: H01M 50/325, H01M 50/317, F16K 15/14

(54) **PRESSURE ADJUSTMENT VALVE FOR POWER STORAGE MODULE**

(30) Priority: 16.09.2021 JP 2021151485
(71) Applicant: NOK Corporation, Tokyo 105-8585 (JP)
(72) Inventor: SAKUMA, Katsuyoshi, Kitaibaraki-shi, Ibaraki 319-1535 (JP)
(74) Representative: Global IP Europe Patentanwaltskanzlei
(86) International application number: PCT/JP2022/028040
(87) International publication number: WO 2023/042541

(57) **Abstract**

Provided is a pressure adjustment valve that can improve discharge of an electrolyte. A pressure adjustment valve 1 that can be attached to a power storage module 500 has: a plurality of valve body portions 10 that are opened in accordance with a pressure in the power storage module 500, and release the pressure in the power storage module 500, each valve body portion 10 having a discharging portion 118 for releasing the pressure, an inside of each valve body portion 10 being isolated from another adjacent valve body portion 10.

## Description

### FIELD

The present disclosure relates to a pressure adjustment valve for power storage module.

### BACKGROUND

Conventional power storage modules such as nickel-metal hydride batteries have pressure adjustment valves that are opened in a case where a gas such as a hydrogen gas is generated due to overdischarge or the like, and the pressures in the modules become predetermined pressures, and discharge the gas from the modules. There are known pressure adjustment valves for power storage module (hereinafter, called "pressure adjustment valves") that can adjust, with simple configuration, the pressures in a plurality of internal spaces between bipolar electrodes (e.g. see WO 2019/064843).

### BRIEF SUMMARY

### TECHNICAL PROBLEM

When being opened, a pressure adjustment valve discharges an electrolyte along with a gas in some cases. In such cases, the electrolyte is accumulated inside the pressure adjustment valve in some cases.

It is difficult with conventional pressure adjustment valves to discharge an electrolyte without disruption of the flow of it since a plurality of valve bodies are provided to one discharge port. Accordingly, the plurality of valve bodies get soaked with the electrolyte. In this case, there is a possibility that, in the conventional pressure adjustment valves, a short circuit occurs between a plurality of cells due to an electrolyte in a case where a plurality of valve bodies are opened simultaneously, and the electrolyte is discharged.

An object of the present disclosure is to provide a pressure adjustment valve that can improve discharge of an electrolyte.

### SOLUTION TO PROBLEM

One aspect of the present disclosure is a pressure adjustment valve that can be attached to a power storage module, and has: a plurality of valve body portions that are opened in accordance with a pressure in the power storage module, and release the pressure in the power storage module, each valve body portion having a discharging portion for releasing the pressure, an inside of each valve body portion being isolated from another adjacent valve body portion.

### ADVANTAGEOUS EFFECTS

The pressure adjustment valve of the present disclosure can improve discharge of an electrolyte.

### BRIEF DESCRIPTION OF DRAWINGS

FIG. 1 is a perspective view schematically depicting a power storage module connected with a pressure adjustment valve according to a first embodiment.
FIG. 2 is an exploded perspective view depicting the schematic configuration of the pressure adjustment valve according to the first embodiment.
FIG. 3 is a cross-sectional view of the pressure adjustment valve in FIG. 2.
FIG. 4 is a front view of a case portion of the pressure adjustment valve in FIG. 2.
FIG. 5 is a cross-sectional view taken along A-A through the case portion in FIG. 4.
FIG. 6 is a front view of the cover portion of the pressure adjustment valve in FIG. 2.
FIG. 7 is a plan view of the cover portion in FIG. 6.
FIG. 8 is an exploded perspective view depicting the schematic configuration of a pressure adjustment valve according to a second embodiment.
FIG. 9 is a front view of a case portion of the pressure adjustment valve in FIG. 8.
FIG. 10 is a plan view of the case portion in FIG. 9.
FIG. 11 is a front view of the cover portion as a lid portion of the pressure adjustment valve in FIG. 8.
FIG. 12 is a plan view of the cover portion in FIG. 11.

### DETAILED DESCRIPTION

Hereinbelow, embodiments are explained with reference to the figures.

### First Embodiment

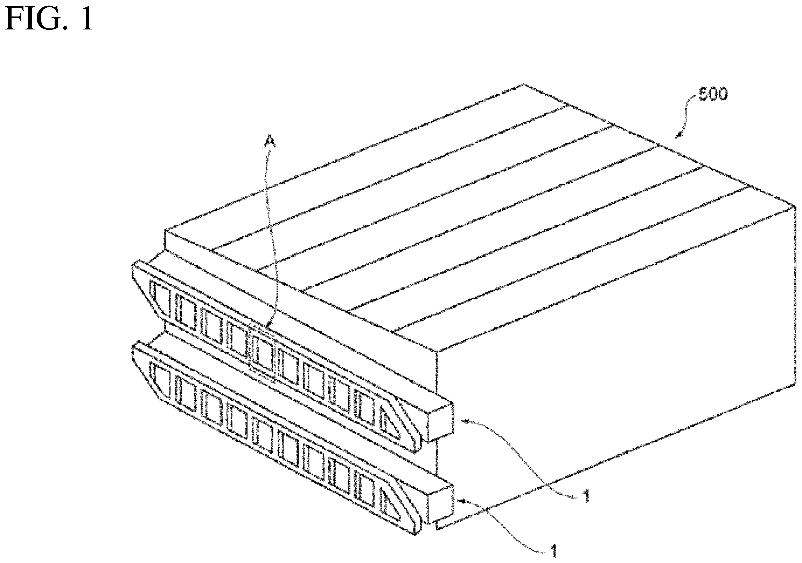

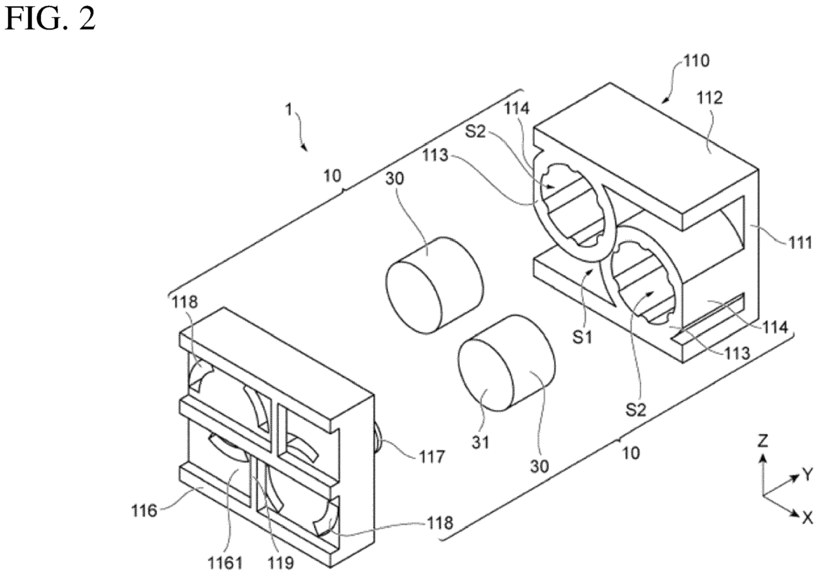

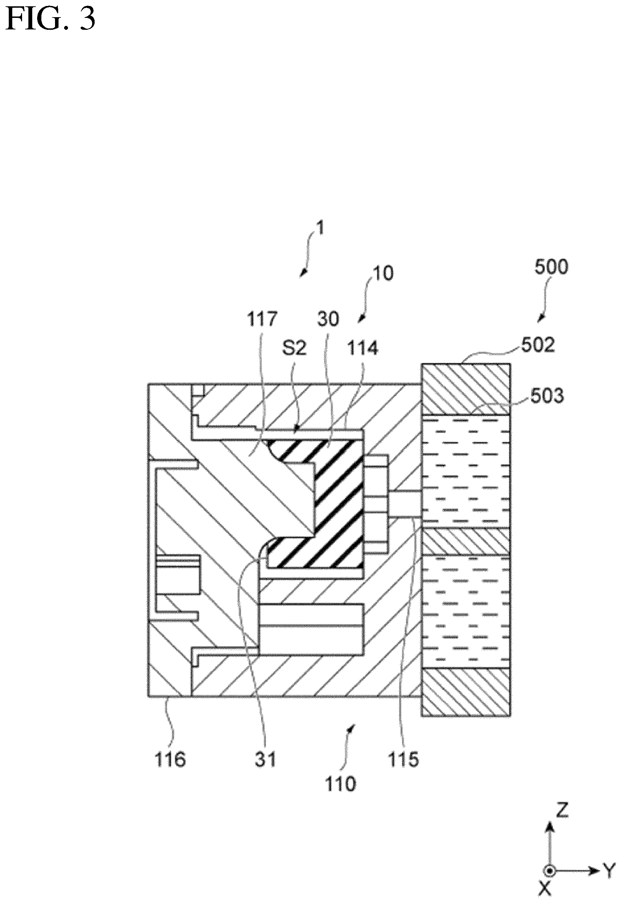

FIG. 1 is a perspective view schematically depicting a power storage module 500 connected with a pressure adjustment valve 1 according to a first embodiment. FIG. 2 is an exploded perspective view depicting the schematic configuration of the pressure adjustment valve 1 according to the first embodiment. FIG. 3 is a cross-sectional view of the pressure adjustment valve 1. FIG. 2 and figures subsequent to FIG. 2 are partial enlarged views of a portion A of the pressure adjustment valve 1 depicted in FIG. 1.

Hereinbelow, for convenience of explanation, the Y-axis direction of the pressure adjustment valve 1 depicted in FIG. 2 and FIG. 3 is defined as the axial direction of columnar valve bodies 30. The Y-axis direction is also referred to as the front-back direction. Regarding the pressure adjustment valve 1, the +Y-axis direction and the -Y-axis direction are also referred to as one end side (first-direction side) and the other end side (second-direction side), respectively.

In the present embodiment, a direction in which the pressure adjustment valve 1 is seen in the +Y-axis direction is defined as the forward-facing direction. One (X-axis direction) of directions orthogonal to the front-back direction (Y-axis direction) is defined as the width direction. The width direction is the longitudinal direction of the pressure adjustment valve 1. The width direction is also referred to as the left-right direction. A direction (Z-axis direction) orthogonal to both the front-back direction (Y-axis direction) and the left-right direction (X-axis direction) is also referred to as the up-down direction or the height direction.

When the positional relationships between or directions of respective constituent elements are explained as being on the right side, left side, front side, rear side, upper side or lower side, these represent positional relationships or directions in the figures, but do not limit the actual positional relationships or directions regarding the pressure adjustment valve.

As depicted in FIG. 1 and FIG. 2, the pressure adjustment valve 1 according to the present embodiment has a plurality of valve body portions 10. The plurality of valve body portions 10 are opened in accordance with the pressure in the power storage module 500, and releases the pressure in the power storage module 500. Each valve body portion 10 has a discharging portion 118 for releasing the pressure. The inside of each valve body portion 10 is isolated from the inside of an adjacent valve body portion 10.

The power storage module 500 has a frame body 502 that retains a plurality of electrode plates. The frame body 502 has an opening 503 that communicates with a space between the plurality of electrode plates. The pressure adjustment valve 1 covers the opening 503.

The valve body portions 10 have a case portion 110. The case portion 110 has cylindrical portions 114. One end of each cylindrical portion 114 is connected to the opening 503, and defines an internal space S2. The internal spaces S2 of the cylindrical portions 114 house the columnar valve bodies 30 which are elastic members.

The case portion 110 further has a bottom portion 111, opening portions 113, pressure introducing portions 115, a cover portion 116, and protruding portions 117. The bottom portion 111 is provided on the first-direction side. The opening portions 113 are provided on the second-direction side. The pressure introducing portions 115 penetrate the bottom portion 111. The cover portion 116 is a lid portion that covers the opening portions 113. The protruding portions 117 are provided to the cover portion 116, and contact end surfaces 31 of the valve bodies 30 from the second-direction side. Hereinbelow, the pressure adjustment valve 1 is explained specifically.

As mentioned above, the pressure adjustment valve 1 has the plurality of valve body portions 10. The valve body portions 10 house the valve bodies 30. The valve body portions 10 are attached to the opening 503 of the power storage module 500. The valve body portions 10 have the cylindrical portions 114, the cover portion 116, the discharging portions 118, and the valve bodies 30.

The materials of the case portion 110 and the cover portion 116 are not particularly limited, and are synthetic resins, for example. As depicted in FIG. 1, for example, the shape of the case portion 110 is an approximately rectangular parallelepiped shape. As long as the case portion 110 can cover the opening 503, the shape of the case portion 110 is not limited particularly. The size of the case portion 110 also can be set as appropriate in accordance with the relationship with the size of the power storage module 500 or the opening 503, and is not limited particularly. The materials of the case portion 110 and the cover portion 116 may be the same material or may be different materials.

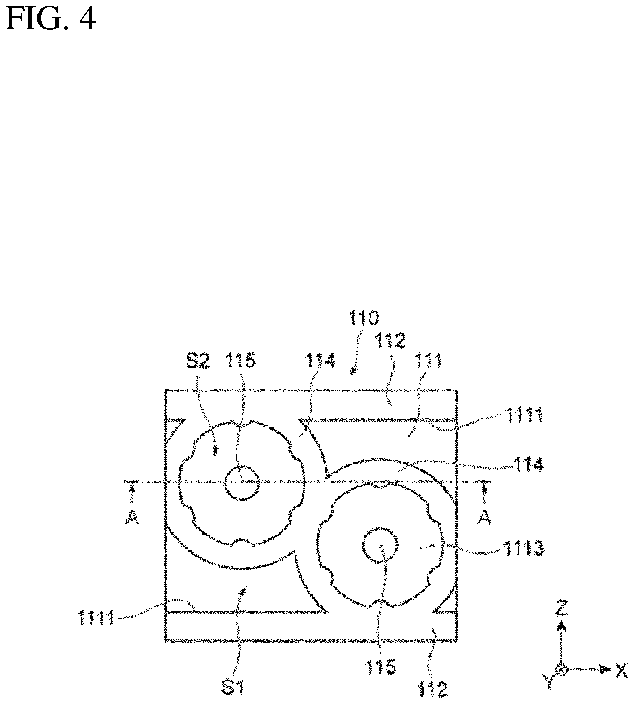

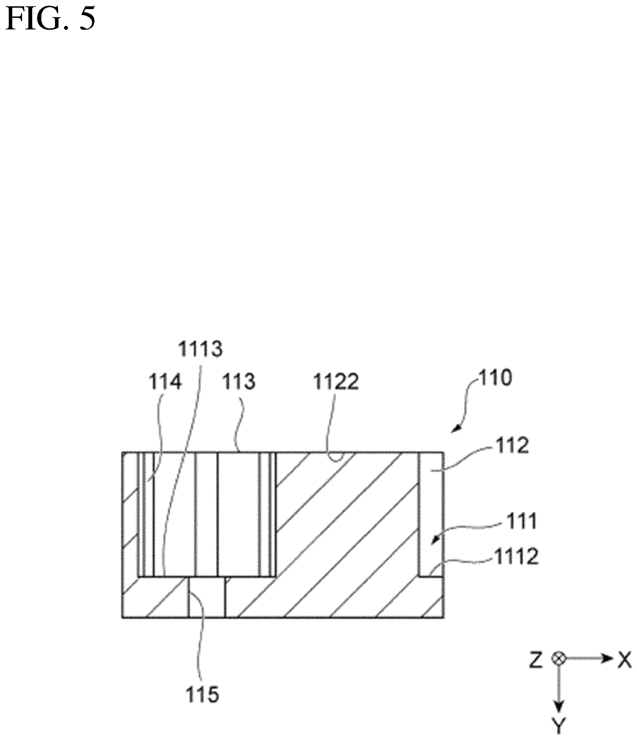

FIG. 4 is a front view of the case portion 110 of the pressure adjustment valve 1. FIG. 5 is a cross-sectional view taken along A-A through the case portion 110.

As depicted in FIG. 4 and FIG. 5, for example, the case portion 110 is a box-type case portion having a rectangular parallelepiped shape whose dimension in the width direction is longer than the dimensions in the height direction and the front-back direction. The case portion 110 has the bottom portion 111, outer circumferential wall portions 112, the opening portions 113, the cylindrical portions 114, and the pressure introducing portions 115.

The bottom portion 111 is provided on the first-direction side of the case portion 110. The bottom portion 111 is attached such that it faces the opening 503 of the frame body 502 in a state where the pressure adjustment valve 1 is attached to the opening 503 as depicted in FIG. 3. The bottom portion 111 is formed to cover the opening 503 in this state.

The outer circumferential wall portions 112 are provided to outer circumferential end portions of the bottom portion 111. The outer circumferential wall portions 112 are provided to end portions 1111 of the bottom portion 111 in the up-down direction. The outer circumferential wall portions 112 are wall-like members that project from the end portions 1111 toward the second-direction side (-Y-axis direction). As depicted in FIG. 4, the bottom portion 111 and the outer circumferential wall portions 112 define, inside the case portion 110, an internal space S1 isolated from the outside.

The opening portions 113 are provided through second-direction-side end portions 1122 of the outer circumferential wall portions 112. The opening portions 113 establish communication between the second-direction side of the internal space S1 of the case portion 110 and the outside.

The cylindrical portions 114 are provided in the internal space S1 of the case portion 110. The cylindrical portions 114 have cylindrical shapes or approximately cylindrical shapes having their axial direction in the front-back direction (Y-axis direction) of the case portion 110. The internal space S1 is provided with one or more cylindrical portions 114. The number of the cylindrical portions 114 is not limited particularly. The first-direction-side end portions of the cylindrical portions 114 are integrated with an inner surface 1112 which is the second-direction-side surface of the bottom portion 111. The second-direction-side end portions of the cylindrical portions 114 communicate with the opening portions 113. By being combined with the cover portion 116 mentioned later, as depicted in FIG. 3, the cylindrical portions 114 can house the valve bodies 30 in the cylindrical or approximately cylindrical internal spaces S2 therein. The internal spaces S2 of the cylindrical portions 114 function as housing chambers that house the valve bodies 30. The number of a plurality of the valve bodies 30 that can be housed in the pressure adjustment valve 1 corresponds to the number of the cylindrical portions 114 provided in the internal space S 1.

The pressure introducing portions 115 are provided through cylindrical-portion bottom portions 1113 which are bottom portions positioned inside the cylindrical portions 114. The pressure introducing portions 115 are through-holes extending in the Y-axis direction in the cylindrical-portion bottom portions 1113. That is, the pressure introducing portions 115 penetrate the first-direction sides and second-direction sides of the cylindrical-portion bottom portions 1113. The pressure introducing portions 115 are not limited to ones that are provided near the centers of circular shapes or approximately circular shapes of the cylindrical-portion bottom portions 1113 as depicted in FIG. 4. For example, the pressure introducing portions 115 are columnar spaces. The shapes of the pressure introducing portions 115 are not particularly limited, and, for example, may be elliptical cylindrical or polygonal columnar spaces.

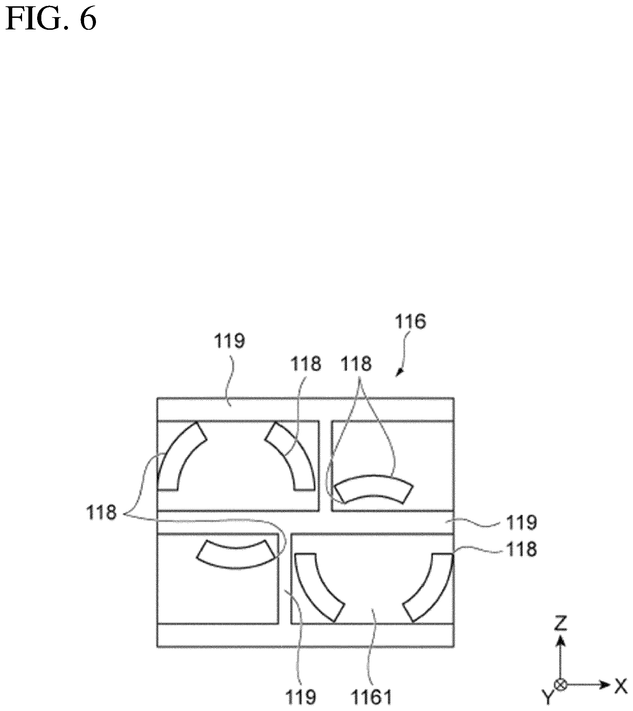

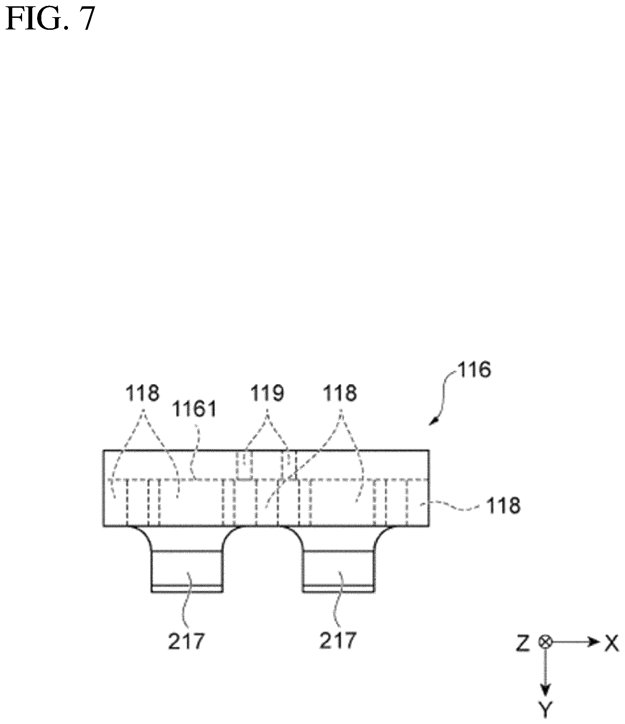

FIG. 6 is a front view of the cover portion 116 of the pressure adjustment valve 1. FIG. 7 is a plan view of the cover portion 116.

As depicted in FIG. 6 and FIG. 7, for example, the cover portion 116 is a plate-like or approximately plate-like member having a rectangular shape whose dimension in the width direction is longer than the dimension in the height direction. The cover portion 116 has a cover portion body 1161, the protruding portions 117, the discharging portions 118, and ribs 119.

The cover portion body 1161 defines a general shape of the plate-like or approximately plate-like cover portion 116 mentioned above. As long as the cover portion 116 can be combined with the case portion 110, the shape of the cover portion body 1161 is not limited to a shape depicted in FIG. 6 and FIG. 7.

The ribs 119 are arranged on the second-direction side at the cover portion body 1161. That is, at the cover portion body 1161, the ribs 119 are provided on the side opposite to the case portion 110. The ribs 119 are projecting-wall-like portions extending in the front-back direction (Y-axis direction). It is sufficient if the ribs 119 are arranged corresponding to the positions of the cylindrical portions 114 and the discharging portions 118. The ribs 119 surround the circumferences of a plurality of the discharging portions 118 in the -Y-axis direction of the discharging portions 118.

The protruding portions 117 are provided to the cover portion body 1161. The protruding portions 117 are protrusions protruding in the Y-axis direction from the cover portion body 1161. The number of a plurality of the protruding portions 117 provided corresponds to the number of the discharging portions 118. The protruding portions 117 are provided such that they are positioned inside the cylindrical surfaces of the cylindrical portions 114 in a state where the cover portion 116 and the case portion 110 are combined as depicted in FIG. 3. In the state where the cover portion 116 and the case portion 110 are combined, the protruding portions 117 protrude toward the case portion 110 located on the first-direction side (+Y-axis direction), and press, from the side of the opening portions 113, the valve bodies 30 arranged inside the cylindrical portions 114.

The protruding portions 117 contact the end surfaces 31 of the valve bodies 30. By covering the opening portions 113 of the case portion 110 with the cover portion 116, the protruding portions 117 pressurize the valve bodies 30. As mentioned later, the valve bodies 30 cover the pressure introducing portions 115 airtightly.

As long as the opening portions 113 of the case portion 110 can be covered with the cover portion 116, and the valve bodies 30 can be pressurized, the shapes and dimensions of the protruding portions 117 are not limited particularly. For example, the protruding portions 117 may have columnar shapes, elliptical cylindrical shapes, or polygonal columnar shapes.

The discharging portions 118 are formed through the cover portion body 1161. The discharging portions 118 are formed at positions that overlap the internal spaces S2 of the cylindrical portions 114 in a state where the opening portions 113 of the cylindrical portions 114 are covered with the cover portion 116. The discharging portions 118 are opening portions that establish communication between the inside and outside of the cover portion body 1161. In FIG. 2, the discharging portions 118 are through-holes extending in the front-back direction (Y-axis direction) of the cover portion body 1161. Each discharging portion 118 is provided corresponding to a cylindrical portion 114 included in a valve body portion 10. Note that the specific shapes of the discharging portions 118 are not limited to examples in FIG. 1, FIG. 5, and FIG. 6. It is sufficient if each discharging portion 118 is formed corresponding to a cylindrical portion 114 such that the discharging portion 118 establishes communication between the inside and outside of the cylindrical portion 114.

Each discharging portion 118 is provided for one of the plurality of valve body portions 10. It is sufficient if at least one discharging portion 118 is formed in one valve body portion 10, and a plurality of discharging portions 118 may be formed in one valve body portion 10. The outer surface of the cover portion body 1161 and the ribs 119 are positioned between the plurality of discharging portions 118. Because of this, the discharging portions 118 are isolated from each other by the cover portion body 1161 and the ribs 119, do not contact each other, and are mutually independent. That is, the cover portion body 1161 and the ribs 119 function as a partition wall portion that isolates the plurality of discharging portions 118 from each other. In addition, there is not another discharging portion 118 provided corresponding to another cylindrical portion 114 in the vertical direction (Z-axis direction) which is a direction in which an electrolyte accumulated in the internal spaces S2 of the cylindrical portions 114 flows out when it leaks. Stated differently, each discharging portion 118 is spaced apart from another discharging portion 118 corresponding to another cylindrical portion 114 with a predetermined interval therebetween in the width direction (X-axis direction), and does not overlap the discharging portion 118. Thereby, the discharging portions 118 do not contact each other, and are mutually independent.

As depicted in FIG. 2 and FIG. 3, the valve bodies 30 have columnar shapes, and are housed in the cylindrical portions 114. For example, the material of the valve bodies 30 is an elastic member such as rubber. The material of the valve bodies 30 is not limited particularly as long as it is an elastic member. The valve bodies 30 cover the cylindrical portions 114 from the side of the cylindrical-portion bottom portions 1113. The valve bodies 30 have lengths in the axial direction (Y-axis direction) of the valve bodies 30 which are shorter than their outer diameters.

Although the valve bodies 30 have columnar shapes, as mentioned above, their lengths in the axial direction (Y-axis direction) are shorter than their outer diameters (the dimensions in the Z-axis direction). Accordingly, it can also be said that the valve bodies 30 have plate-like shapes or disc-like shapes. More specifically, the valve bodies 30 can have approximately disc-like shapes or the like.

By being inserted into the cylindrical portions 114, the valve bodies 30 cover the openings of the pressure introducing portions 115. Thereby, the airtight state of the pressure introducing portions 115 is maintained until the inside of the power storage module 500 reaches a desired pressure, in a state where the pressure adjustment valve 1 is attached to the power storage module 500.

When the pressure of the inside of the power storage module 500 (hereinafter, also referred to as the "internal pressure" simply) rose to a desired value, the valve bodies 30 move away from the cylindrical-portion bottom portions 1113 in accordance with the internal pressure of the power storage module 500, and are opened. Here, the value of the internal pressure of the power storage module 500 at which the valve bodies 30 move away from the cylindrical-portion bottom portions 1113 is set to such a value that the valve bodies 30 that are opened can prevent the internal pressure of the power storage module 500 from being excessively high.

Note that the value of the pressure of the inside of the power storage module 500 at which the valve bodies 30 move away from the cylindrical-portion bottom portions 1113 can change depending on various conditions. Specifically, the value of the internal pressure can change depending on individual differences (variations) or temporal changes of the valve bodies 30.

Due to the movement of the valve bodies 30 away from the cylindrical-portion bottom portions 1113, gaps are generated between the valve bodies 30 and the cylindrical-portion bottom portions 1113. Through these gaps, compressed gas in the power storage module 500 is introduced into the pressure adjustment valve 1. Then, the pressure of the inside of the power storage module 500 lowers. This results in the valve bodies 30 returning to the original positions inside the cylindrical portions 114 due to the elastic force, that is, positions at which the valve bodies 30 contact the cylindrical-portion bottom portions 1113, and the valve bodies 30 cover the pressure introducing portions 115 airtightly.

When the valve bodies 30 move away from the cylindrical-portion bottom portions 1113, and the compressed gas in the power storage module 500 is discharged through the gaps generated between the valve bodies 30 and the cylindrical-portion bottom portions 1113, an electrolyte is discharged along with the compressed gas in some cases. In this case, the electrolyte is accumulated inside the cylindrical portions 114 in some cases.

Corresponding to the plurality of cylindrical portions 114 that house the valve bodies 30, the discharging portions 118 are provided through the cover portion body 1161. The discharging portions 118 discharge, to the outsides of the cylindrical portions 114, the electrolyte flowing into the internal spaces S2 of the cylindrical portions 114 when the valve bodies 30 are opened. Because of this, the pressure adjustment valve 1 can discharge the electrolyte accumulated inside the cylindrical portions 114 without disruption of the flow of it. Then, the pressure adjustment valve 1 prevents the valve bodies 30 from being soaked with the electrolyte.

The discharging portions 118 provided corresponding to the plurality of valve bodies 30 are isolated from each other by the cover portion body 1161. Because of this, it is possible to prevent a short circuit between a plurality of cells from occurring due to the electrolyte in a case where the plurality of valve bodies 30 are opened simultaneously, and the electrolyte is discharged.

### Second Embodiment

Next, a pressure adjustment valve 2 according to a second embodiment is explained. Hereinbelow, constituent elements having functions identical or similar to those in the pressure adjustment valve 1 according to the first embodiment are given identical reference signs, and explanations thereof are omitted. Only different constituent elements are explained.

As depicted in FIG. 7, similarly to the pressure adjustment valve 1 according to the first embodiment, the pressure adjustment valve 2 according to the second embodiment has a plurality of valve body portions 20 that are opened in accordance with the pressure in the power storage module 500 depicted in FIG. 1, and release the pressure in the power storage module 500. Each valve body portion 20 has discharging portions 218 for releasing the pressure. The inside of each valve body portion 20 is isolated from the inside of another adjacent valve body portion 20.

The pressure adjustment valve 2 covers the opening 503 that communicates with the space between the plurality of electrode plates of the power storage module 500 that are provided to the frame body 502, in the frame body 502 that retains the plurality of electrode plates. The discharging portions 218 are provided through side surfaces 220 of cylindrical portions 214, and establish communication between the insides and outsides of the cylindrical portions 214. The cylindrical portions 214 of the valve body portions 20 are provided to a case portion 210. One end of each cylindrical portion 214 is connected to an opening. The cylindrical portions 214 have the internal spaces S2. The internal spaces S2 of the cylindrical portions 214 house the columnar valve bodies 30 which are elastic members. In addition to the discharging portions 218, the case portion 210 has a bottom portion 211, opening portions 213, the cylindrical portions 214, and pressure introducing portions 215. The bottom portion 211 is provided on the first-direction side. The opening portions 213 are provided on the second-direction side. The cylindrical portions 214 are provided in the internal space S1 of the valve body portions 20, and can house the valve bodies 30. The pressure introducing portions 215 penetrate the bottom portion 211.

The pressure adjustment valve 2 has a cover portion 216 and protruding portions 217. The cover portion 216 is a lid portion that covers the opening portions 213. The protruding portions 217 are provided to the cover portion 216, and contact end surfaces of the valve bodies 30 from the second-direction side. Hereinbelow, the pressure adjustment valve 2 is explained specifically.

The pressure adjustment valve 2 has the plurality of valve body portions 20. Similarly to the pressure adjustment valve 1 according to the first embodiment, the valve body portions 20 house the valve bodies 30, and are attached to the opening 503 of the power storage module 500.

Similarly to the valve body portion 10 according to the first embodiment, the valve body portions 20 have the cylindrical portions 214, the discharging portions 218, the cover portion 216, and the valve bodies 30.

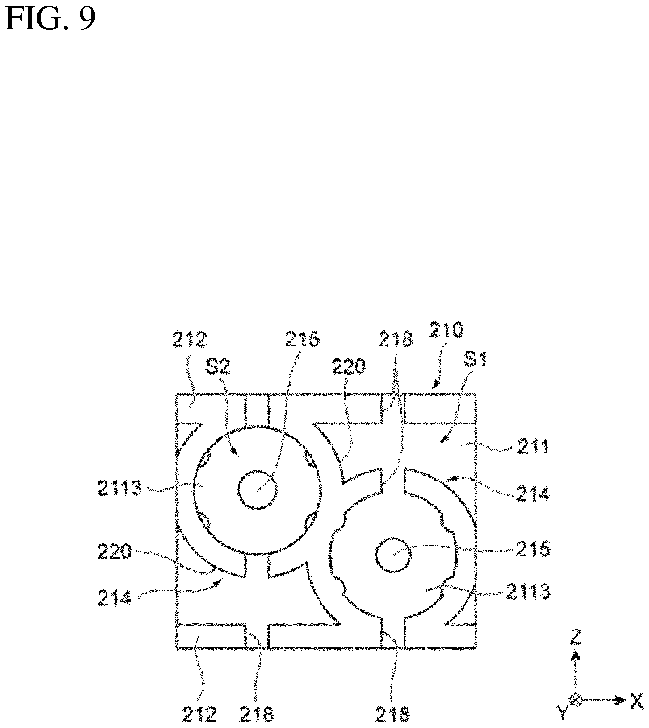

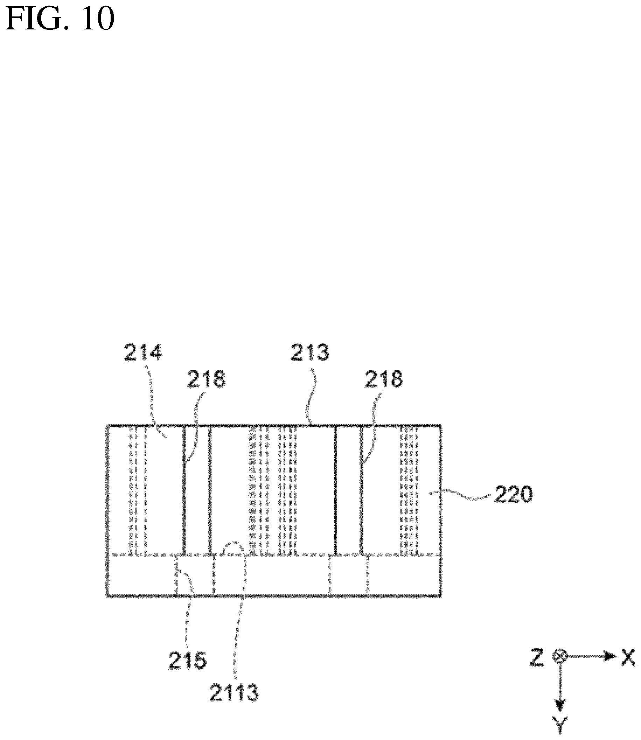

FIG. 9 is a front view of the case portion 210 of the pressure adjustment valve 2. FIG. 10 is a plan view of the case portion 210.

As depicted in FIG. 9 and FIG. 10, for example, the case portion 210 is a box-type member having a rectangular parallelepiped shape whose dimension in the width direction is longer than the dimensions in the height direction and the front-back direction. The case portion 210 has the bottom portion 211, outer circumferential wall portions 212, the opening portions 213, the cylindrical portions 214, the pressure introducing portions 215, and the discharging portions 218. The case portion 210 is different from the case portion 110 according to the first embodiment in that the case portion 210 has the discharging portions 218 that establish communication between the insides and outsides of the cylindrical portions 214 through the side surfaces 220 of the cylindrical portions 214, and the outer circumferential wall portions 212.

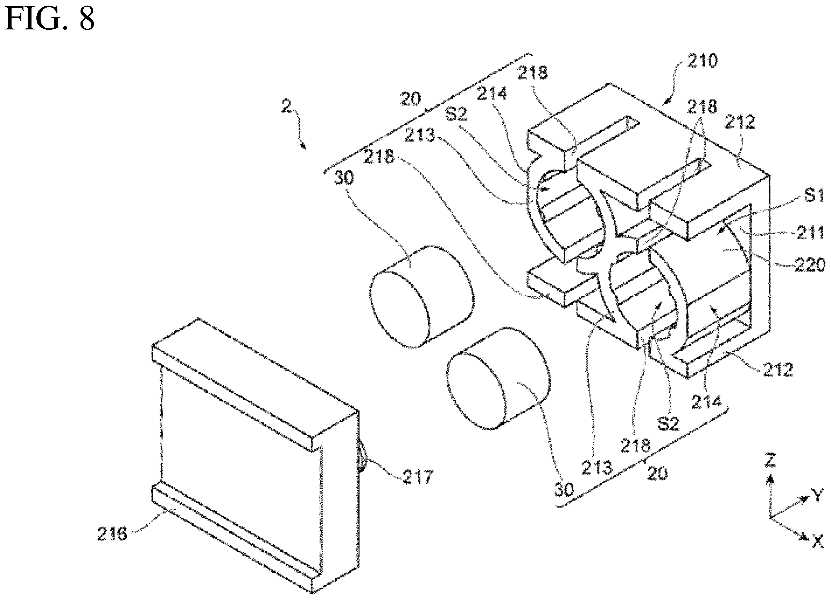

The discharging portions 218 are formed through the cylindrical or approximately cylindrical side surfaces 220 of the cylindrical portions 214, and the outer circumferential wall portions 212. The discharging portions 218 are opening portions that establish communication between the insides and outsides of the side surfaces 220 of the cylindrical portions 214, and the insides and outsides of the outer circumferential wall portions 212. In FIG. 8 and FIG. 10, the discharging portions 218 extend in the front-back direction (Y-axis direction) of the side surfaces 220 and the outer circumferential wall portions 212. Each discharging portion 218 is provided corresponding to one cylindrical portion 214.

Note that the specific shapes of the discharging portions 218 are not limited to examples in FIG. 9 and FIG. 10. It is sufficient if each discharging portion 218 is formed corresponding to a cylindrical portion 214 such that the discharging portion 218 establishes communication between the inside and outside of the side surface 220.

Each discharging portion 218 is provided corresponding to one of a plurality of the cylindrical portions 214. It is sufficient if at least one discharging portion 218 is formed for one cylindrical portion 214. As depicted in FIG. 8 to FIG. 10, a plurality of the discharging portions 218 may be formed for one cylindrical portion 214. The outer-circumferential-side surfaces of the side surfaces 220, and the outer circumferential wall portions 212 are positioned between the plurality of discharging portions 218. Because of this, the discharging portions 218 are isolated from each other by the side surfaces 220 and the outer circumferential wall portions 212. The discharging portions 218 do not contact each other, and are mutually independent. That is, the side surfaces 220 of the cylindrical portions 214, and the outer circumferential wall portions 212 function as a partition wall portion that isolates the plurality of discharging portions 218 from each other. An electrolyte accumulated in the internal spaces S2 of the cylindrical portions 214 flows out in the vertical direction (Z-axis direction) when it leaks. There is not another discharging portion 218 provided corresponding to another cylindrical portion 214 in the vertical direction (Z-axis direction). Stated differently, each discharging portion 118 is spaced apart from another discharging portion 118 corresponding to another cylindrical portion 114 with a predetermined interval therebetween in the width direction (X-axis direction), and does not overlap the discharging portion 218. Thereby, the discharging portions 218 are isolated from each other, do not contact each other, and are mutually independent.

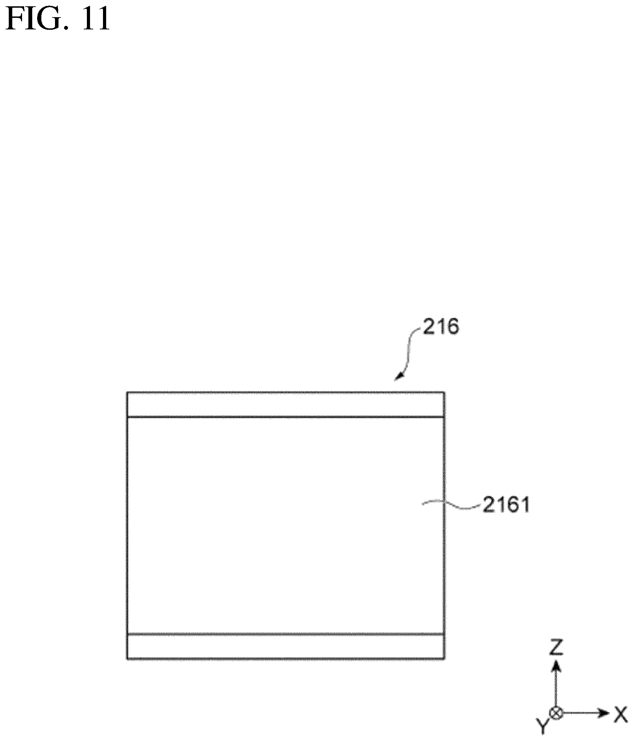

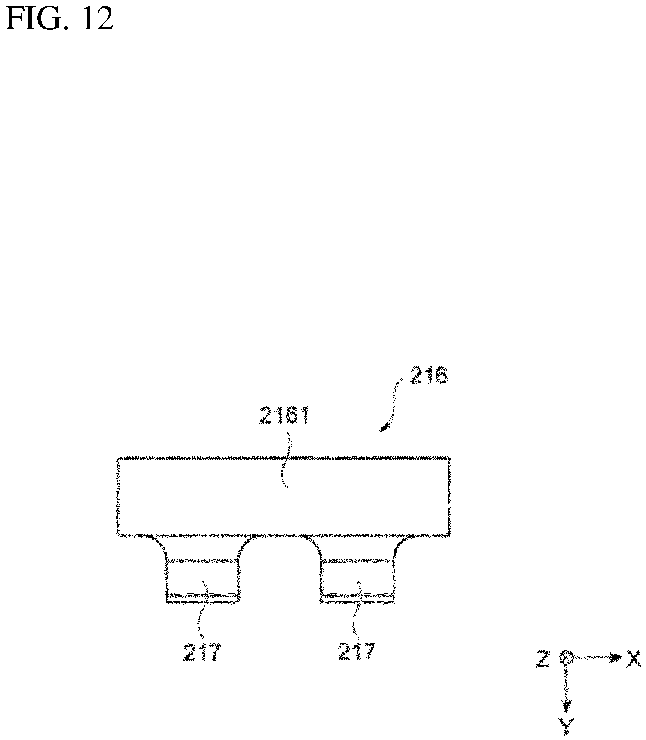

FIG. 11 is a front view of the cover portion 216 of the pressure adjustment valve 2. FIG. 12 is a plan view of the cover portion 216.

As depicted in FIG. 11 and FIG. 12, for example, the cover portion 216 is a plate-like or approximately plate-like member having a rectangular shape whose dimension in the width direction is longer than the dimension in the height direction. The cover portion 216 has a cover portion body 2161 and the protruding portions 217. The cover portion 216 according to the present embodiment is different from the cover portion 116 according to the first embodiment in that the cover portion 216 according to the present embodiment does not have the discharging portions 118.

In the pressure adjustment valve 2, when the valve bodies 30 move away from cylindrical-portion bottom portions 2113, and compressed gas in the power storage module 500 is discharged through gaps generated between the valve bodies 30 and the cylindrical-portion bottom portions 2113, an electrolyte is discharged along with the compressed gas in some cases. In this case, the electrolyte is accumulated in the internal spaces S2 of the cylindrical portions 214 in some cases.

The pressure adjustment valve 2 is provided with the discharging portions 218 through the side surfaces 220 of the cylindrical portions 214, and the outer circumferential wall portions 212, corresponding to the plurality of cylindrical portions 214 that house the valve bodies 30. Because of this, the pressure adjustment valve 2 can discharge the electrolyte accumulated inside the cylindrical portions 214 without disruption of the flow of it. Accordingly, the pressure adjustment valve 2 can prevent the valve bodies 30 from being soaked with the electrolyte.

The discharging portions 218 are isolated from each other by the side surfaces 220 of the cylindrical portions 214, and the outer circumferential wall portions 212. Because of this, it is possible to prevent a short circuit between a plurality of cells from occurring due to the electrolyte in a case where the plurality of valve bodies 30 are opened simultaneously, and the electrolyte is discharged.

Whereas embodiments of the present invention have been explained thus far, the present invention is not limited to the embodiments of the present invention described above, but incorporates every possible aspect included in the concept and claims of the present invention. In addition, respective constituent elements may be combined selectively as appropriate so as to overcome or attain at least some of disadvantages and effects mentioned above. For example, the shape, material, arrangement, size, or the like of each constituent element in the embodiments described above can be changed as appropriate depending on specific usage modes of the present invention.

In the pressure adjustment valve 1 according to the first embodiment, the cover portion body 1161 of the cover portion 116 has the discharging portions 118 that establish communication between the inside and outside of the cover portion 116. In the pressure adjustment valve 2 according to the second embodiment, the side surfaces 220 of the cylindrical portions 214, and the outer circumferential wall portions 212 have the discharging portions 218 that establish communication between the insides and outsides of the cylindrical portions 214. In the pressure adjustment valves according to the first and second embodiments, both the cover portions and the case portions may have the discharging portions.

### Reference Signs List

1, 2: pressure adjustment valve
10, 20: valve body portion
31: end surface
30: valve body
110, 210: case portion
111, 211: bottom portion
112, 212: outer circumferential wall portion
113, 213: opening portion
114, 214: cylindrical portion
115, 215: pressure introducing portion
116, 216: cover portion
117, 217: protruding portion
118, 218: discharging portion
119: rib
220: side surface
500: power storage module
502: frame body
503: opening
1112: inner surface
1113, 2113: cylindrical-portion bottom portion
1111, 1122: end portion
1161, 2161: cover portion body

## Claims

1. A pressure adjustment valve that can be attached to a power storage module, the pressure adjustment valve comprising:
a plurality of valve body portions that are opened in accordance with a pressure in the power storage module, and release the pressure in the power storage module, each valve body portion having a discharging portion for releasing the pressure, an inside of each valve body portion being isolated from another adjacent valve body portion.

2. The pressure adjustment valve according to claim 1, further comprising a partition wall portion that isolates a plurality of the discharging portions from each other.

3. The pressure adjustment valve according to claim 1 or 2, wherein
each valve body portion includes:
a valve body that is opened in accordance with the pressure in the power storage module; and
a housing chamber that houses the valve body, and
each discharging portion discharges, to an outside of the housing chamber, an electrolyte that flows into the housing chamber when the valve body is opened.

4. The pressure adjustment valve according to any one of claims 1 to 3, wherein each valve body portion includes:
a bottom portion;
an opening portion provided on a side opposite to the bottom portion; and
a side surface provided between the bottom portion and the opening portion, and
the discharging portion is provided through the side surface.

5. The pressure adjustment valve according to any one of claims 1 to 4, wherein
each valve body portion includes:
a bottom portion;
an opening portion provided on a side opposite to the bottom portion; and
a lid portion that covers the opening portion, and
the discharging portion is provided through the lid portion.

6. The pressure adjustment valve according to claim 5, wherein
the partition wall portion includes:
a cover portion body that defines an outline shape of the lid portion; and
a rib provided to the cover portion body, and
a plurality of the discharging portions are mutually independent due to the cover portion body and the rib.

7. The pressure adjustment valve according to claim 6, wherein, in a width direction, each discharging portion does not overlap a discharging portion corresponding to another valve body portion.
